# EUROPEAN PATENT APPLICATION

(11) **EP 1 528 456 A2**
(43) Date of publication of application: **04.05.2005**
(21) Application number: 04025410.4
(22) Date of filing: 26.10.2004
(51) Int. Cl.: G06F 1/26, H02J 1/00, H02M 3/28

(54) **Power supply device for computer device**

(30) Priority: 27.10.2003 CN 200310103732
(71) Applicant: Shu Ruey Technology Co., Ltd., Taipei City, 114 (TW)
(72) Inventor: Tsai, Chen-Ting, Taipei City 114 (TW)
(74) Representative: Reinhard - Skuhra - Weise & Partner GbR

(57) **Abstract**

A power supply device for a computer device mainly comprises a DC to DC converter used to receive and convert an outside DC power supply to a variety of DC voltages needed for a computer device and an up/down regulator connected to the DC to DC converter and used to stabilize an output voltage. According to the present invention, the up/down regulator is installed before the +12 voltage input end of the computer device. Whereby, the +12 voltage can be stabilized and the work loss of the power supply for the computer can be lowered down.

## Description

### BACKGROUND OF THE INVENTION

### Field of the Invention

The present invention relates to a power supply device for a computer device, and more particularly to a device used for stabilizing voltage and lowering the work loss of a power supply of a computer.

### Description of Related Art

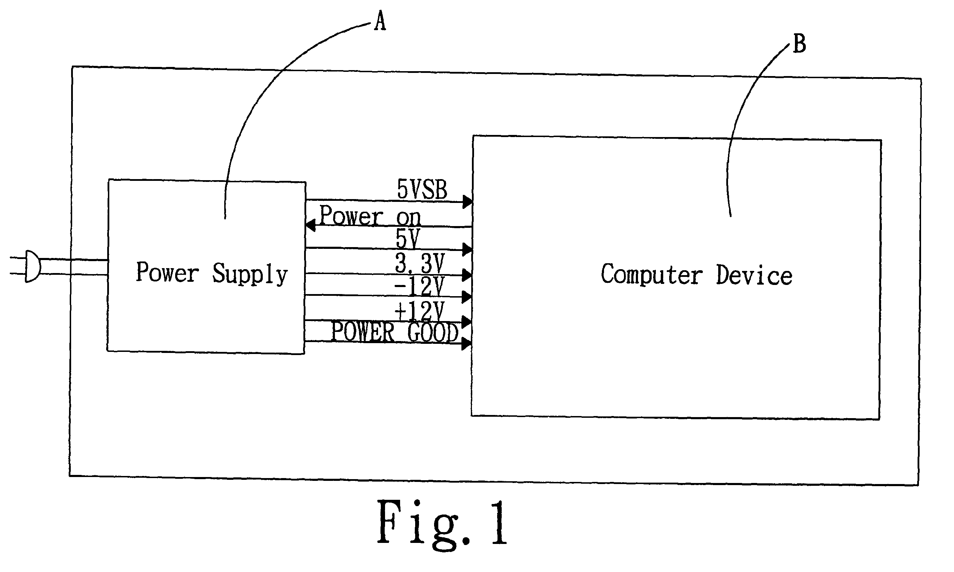

A power supply of the prior art is used with a multi-outputs manner of an AC to DC converter. As shown in Figure 1, when a power supply **A** is connected to a power source, an output voltage of 5VSB is input into a computer device **B** after it is converted from an AC voltage. And, after a switch is turned on, a "Power ON" signal is output from the computer device **B** to the power supply **A** so as to yield DC voltages of 3.3V, 5.0V, 12V, -12V and "Power Good" Signal to start the computer device. But, a computer device **B** provided with such a kind of power supply **A** can only be used indoors and the dimension thereof is quite large for preventing it from overheating; obviously, it is not conformed to compactness and lightness tendency for an electric product.

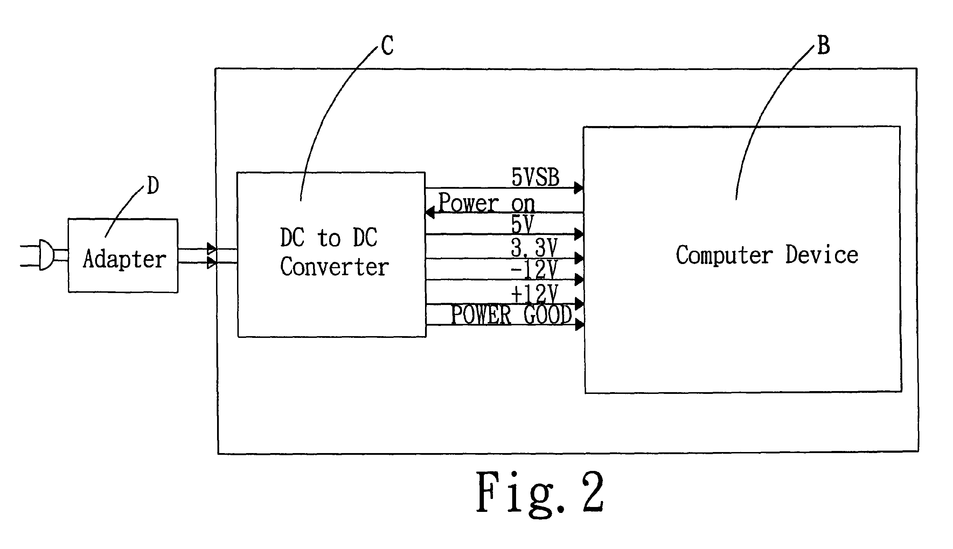

Next, please refer to FIG. 2. When a DC to DC converter **C** is used for enhancing efficiency and shrinking dimension, an adapter **D** is installed between an outside AC power source and the converter. AC voltage is first transferred to DC voltage and is then transferred to multiple sets of output voltages to conform to the practical needs for a computer device **B**. Although such a kind of structure can be used to shrink the dimensions of the housings of the DC to DC converter **C** and even the whole computer device **B**, but it cannot be used on a DC voltage such as one of car power source (10~16V), i.e. a voltage below 12V cannot be transferred to 12V.

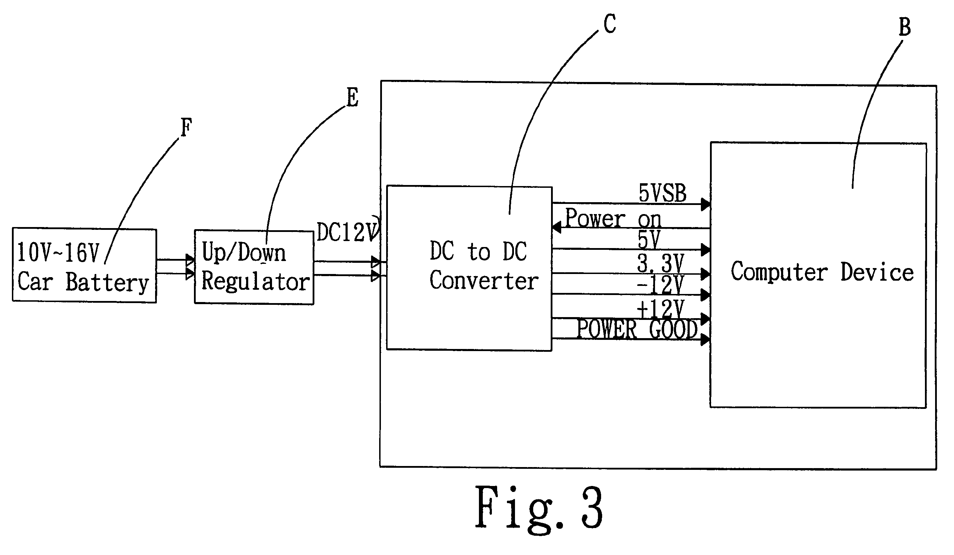

Please refer to FIG. 3. For being further used on a situation such as a car power source, the following structure is proposed. It mainly installs a up/down regulator **E** between a DC to Dc converter **C** and car battery **F** and uses the regulator **E** to adjust a battery voltage to 12V, and then, input it to the DC to DC converter **C** so as to yield a needed output voltage to the computer device **B**. Although stabilized voltages can be obtained from the car battery **F** of 10~30V through such a kind of structure, but the work loss thereof is quite large and is always up to the half of the output work owing to the regulator E and the converter **C** in the passage so that it is not conform to environmental concept for saving energy.

### SUMMARY OF THE INVENTION

The main object of the present invention is to provide a power supply device for a computer device, an up/down regulator is installed before +12V voltage input end of a computer so as to attain the requirement of a stable +12V voltage.

Another object of the present invention is to provide a power supply device for a computer device, an up/down regulator is installed before +12V voltage input end of a computer so as to reduce the work loss of a power supply.

### BRIEF DESCRIPTION OF THE DRAWINGS

The present invention can be more fully understood by reference to the following description and accompanying drawings, in which:
FIG. 1 is a block diagram, showing a circuit of AC to DC power supply of the prior art;
FIG. 2 is a block diagram, showing a circuit of DC to DC power supply of the prior art;
FIG. 3 is a block diagram, showing a circuit of a power supply installed with an up/down regulator of the prior art;
FIG. 4 is a block diagram, showing a circuit of a power supply device of a preferred embodiment according to the present invention
FIG. 5 is a block diagram, showing a circuit in an adaptor of a preferred embodiment according to the present invention; and
FIGS. 6A to 6E are block diagrams, showing circuits of DC to DC converters of preferred embodiments according to the present invention.

### DETAILED DESCRIPTION OF THE PREFERRED EMBODIMENTS

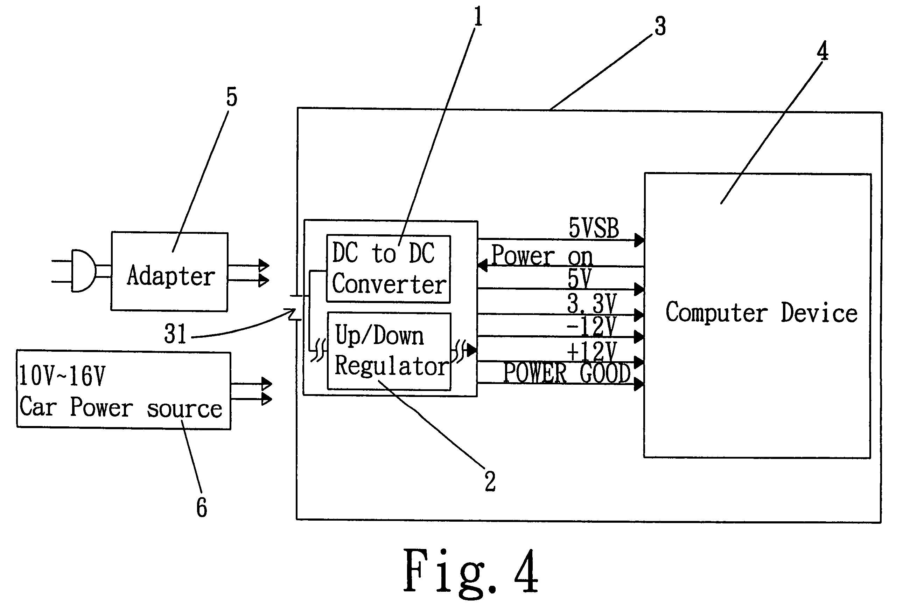

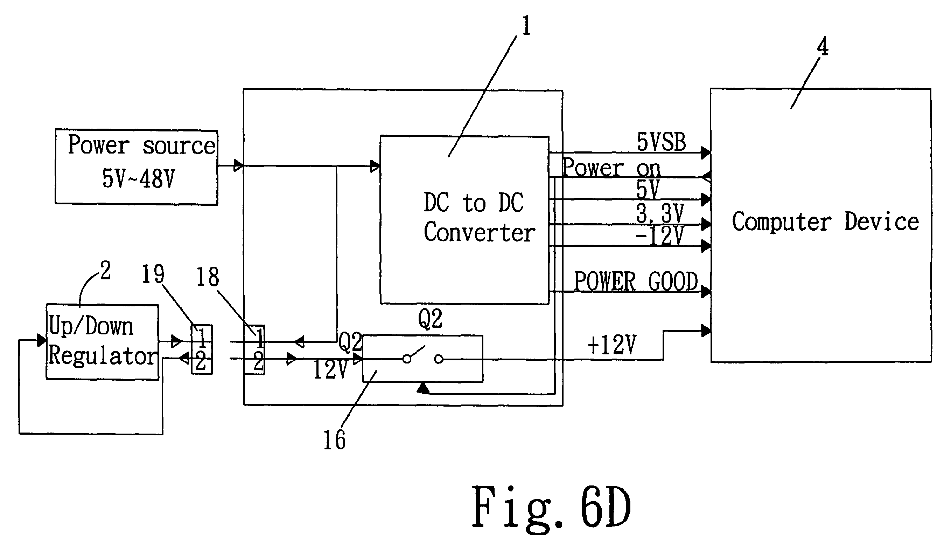

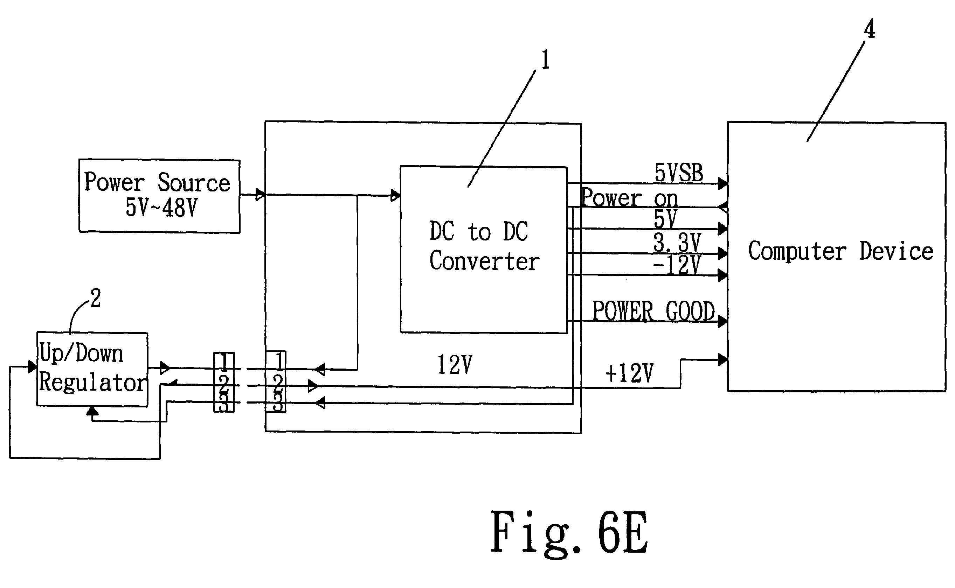

First, please refer to FIG. 4. FIG. 4 is a block diagram showing a circuit of a power supply device of a preferred embodiment according to the present invention. The device mainly comprises a DC to DC converter **1** and an up/down regulator **2**. One end of the DC to DC converter **1** (input end) is connected to an outlet **31** on a housing **3** so as to communicate with an adaptor **5** or car power source **6** plugged into the outlet **31**. Another end of the DC to DC converter **1** (output end) is connected to outside output voltage lines of 5VSB, 3.3V, 5.0V, 12V, -12V and "Power Good" Signal so as to output the DC voltage converted by the DC to DC converter **1** to a computer device **4**, in which the output voltages of SVSB, 3.3V, 5.0V, -12V and "Power Good" Signal are not different from the ones of the prior art, except an up/down regulator **2** is installed before the +12V voltage input end of the computer device **4**. As FIG. 4 shows, although the up/down regulator **2** is installed inside of the housing **3**, but an up/down regulator **2** can be installed apart from a DC to DC converter **1** (as FIG. 6D and 6E show), if the space occupied by a power supply device according to the present invention is expected to be used with good flexibility. Therefore, under such kind of circumstance, an input voltage, which comes from a DC power source transferred from an AC power source through the adaptor **5** or a DC power source of car power source **6**, is transferred to an output voltage of 5VSB through the DC to DC converter **1** and is then input into the computer device **4**. After a power switch is turned on, a "Power ON" signal is output from the computer device **4** and input to the DC to DC converter to yield 3.3V, 5.0V, +12V, -12V and "Power Good" Signal to activate the computer device **4**.

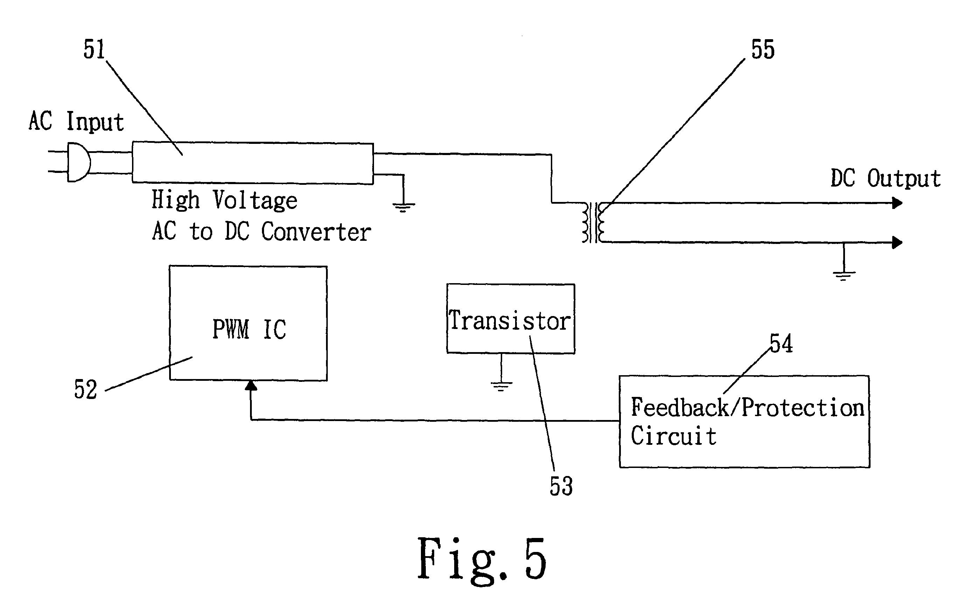

Next, please refer to FIG. 5. FIG. 5 is a block diagram showing a circuit in an adaptor of a preferred embodiment according to the present invention. An AC power source is controlled by a PWM IC **52**, transistor **53** and Feedback/protection circuit **54** after passing through a high voltage AC to DC converter **51** and is then output a single set of DC power sources of 5~ 48V through a transformer **55**. Because the adaptor is well known to the person familiar with the art and is not the stressing point of the present invention, the description about it is omitted here.

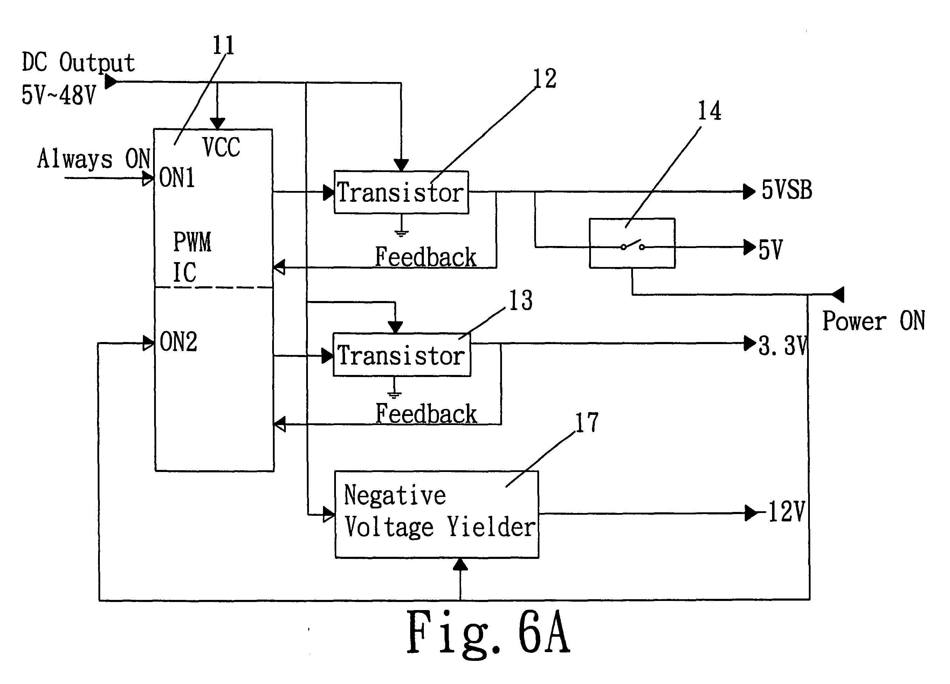

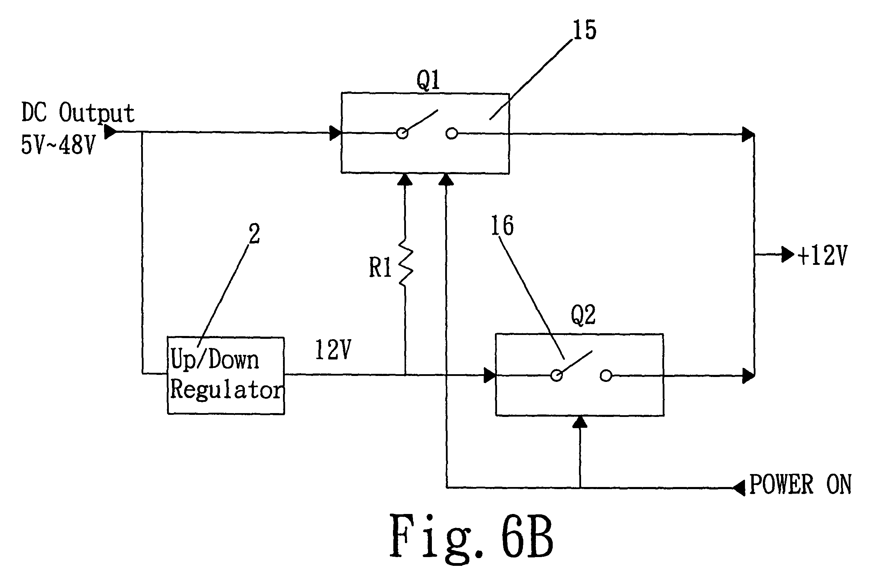

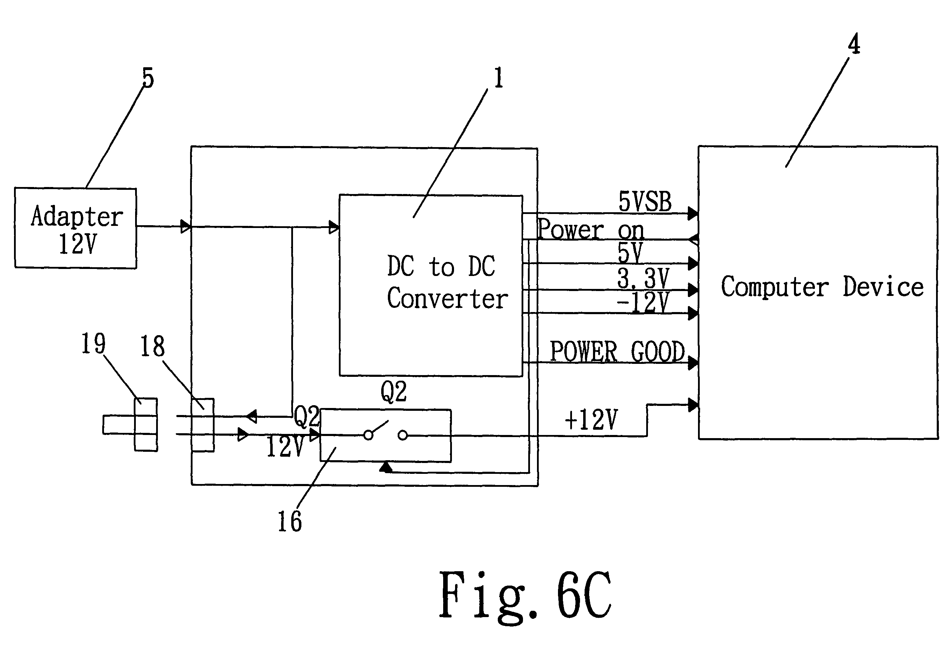

Furthermore, please refer to FIGS. 6A to 6E. FIGS. 6A to 6E are block diagrams showing circuits of DC to DC converters of preferred embodiments according to the present invention. In FIG. 6A, a transistor **12** is activated under a situation that an **ON1** port of a PWM IC **11** is "Always ON", a voltage of 5VSB can be obtained when a DC power source is input to the transistor **12**. Next, a control "Power ON" signal output from the computer device communicates a switch **14** so as to obtain 5V voltage and allows an **ON2** port to be turned on to activate a transistor **13** so as to obtain 3.3V voltage. Furthermore, the input DC power source is passed through a negative voltage generator 17 to yield -12V voltage. Moreover, there are many ways to form a DC to DC converter mentioned above. For example, a DC to DC converter can be composed of many PWM ICs or formedby increasing or decreasing transistors or even by increasing or decreasing switches; such kinds of formations can also attain the outputs of 5VSB, 5V, 3.3V and-12V. In FIG. 6B, the control "Power ON" signal coming from the computer device causes a switch **15** to be communicated to allow +12V voltage to be obtained at the input end of the computer device if there exists no up/down regulator **2**. And, if an up/down regulator **2** exits, the control "Power ON" signal coming from the computer device communicates a switch **16**, because +12V obtained after regulating causes the switch **15** to be isolated and not to be communicated through resistance **R1**. Under such kind of circumstance, a stable DC voltage of +12V is output from the up/down regulator **2** and passed through the switch **16** to yield a voltage of +12V to output to the computer device **4**. FIG. 6C is a block diagram showing a power supply device of another preferred embodiment according to the present invention; the power supply device depicted in FIG. 6C is used in a situation that an outside power source is input thereto through an adaptor **5**. Only a switch **16**, which is also communicated by a "Power ON" signal, may be needed to install in such kind of structure. And a male (female) connecter **18** is installed on the power supply device and is then connected with a female (male) connecter **19** whose leads are grounded. FIG. 6D is a block diagram showing a power supply device of still another preferred embodiment according to the present invention; the power supply device depicted in FIG. 6D is used in a situation that an outside power source is input thereto from a power source. Only a switch **16**, which is also communicated by a "Power ON" signal, may be needed to install in such kind of structure. And a male (female) connecter **18** is installed on the power supply device and is then connected with a female (male) connecter **19** connected to an up/down regulator **2**. FIG. 6E is a block diagram showing a power supply device of still another preferred embodiment according to the present invention; the power supply device depicted in FIG. 6E is used in a situation that an outside power source is input thereto from a power source. No switch is installed in such kind of structure, a "Power ON" signal is directly used to activate an up/down regulator **2**. And, a male (female) connecter **18** is installed on the power supply device and is then connected with a female (male) connecter **19** connected to an up/down regulator **2**.

Finally, for verifying the decreasing effect of a work loss of the present invention is better than the prior art, please refer to FIG. 3 and 4. If a work generally required for inputting to a computer device is 80W and work efficiency of each part is 80%, it can be known that the work at the input end of the DC to DC converter must be reached to 100W and consequently at the input end of the up/down regulator must be 125W for the conventional device depicted in FIG. 3. But, for the device according to the present invention depicted in FIG. 4, if 20W is needed for the power source line of 12V among the work 80W input to the computer device, the total work for other lines is 60W. Under such kind of circumstance, the work at the output of the DC to DC converter must only be 85W, and one at the input end of the DC to DC converter is 105W approximately. Thus it can be seen, the work loss of the present invention is far lower than the prior art.

Furthermore, an output voltage of a general car is 10~16V, and one of a large-sized vehicle is 22~28V, a power supply device according to the present invention can bear an input voltages of 5~48V. Therefore, the power supply device is suitable for being used in a computer device whose power is supplied by one of power sources of all kinds of vehicles, a battery or others.

It is noted that the power supply structure for a computer device described above is the preferred embodiment of the present invention for the purpose of illustration only, and are not intended as a definition of the limits and scope of the invention disclosed. Any modifications and variations that may be apparent to a person skilled in the art are intended to be included within the scope of the present invention.

## Claims

1. A power supply device for a computer device, mainly comprising:
a DC to DC converter, used for receiving outside DC power source, and transferring said outside DC power source to various DC voltages needed for a computer device; an up/down regulator, connected to said DC to DC converter, used to stabilize an output voltage +12;
wherein said up/down regulator is installed before said output voltage +12V of said computer device.

2. The power supply device according to claim 1, wherein said up/down regulator is installed outside or inside of a housing accepting said DC to DC converter and said computer device.

3. The power supply device according to claim 1, wherein a voltage of said outside DC power source is 5~48V.

4. The power supply device according to claim 1, wherein one switch or two switches (is) are installed at an output end of said output voltage +12V to control a voltage output, and ON or OFF of any one of said two switches is decided by whether a signal "Power ON" and said up/down regulator exist or not.

5. The power supply device according to claim 1, wherein a connecter is installed in said power supply device to connect with an up/down regulator.

6. The power supply device according to claim 1, wherein said computer device is a personal computer, industrial computer, car computer, cashier machine, security system or monitoring system.
